## Europäisches Patentamt
## European Patent Office
## Office européen des brevets

(11) Veröffentlichungsnummer: **0 049 214**
A1

# (12) EUROPÄISCHE PATENTANMELDUNG

(21) Anmeldenummer: 81730096.5

(22) Anmeldetag: 22.09.81

(51) Int. Cl.³: **H 02 K 7/02**

(30) Priorität: 29.09.80 DE 3037274

(43) Veröffentlichungstag der Anmeldung: 07.04.82
Patentblatt 82/14

(84) Benannte Vertragsstaaten: **AT BE CH DE FR GB IT LI LU NL SE**

(71) Anmelder: **Popescu-Goetsch, Florian Raul, Dipl.-Ing., Ringstrasse 15, D-1000 Berlin 45 (DE)**

(72) Erfinder: **Popescu-Goetsch, Florian Raul, Dipl.-Ing., Ringstrasse 15, D-1000 Berlin 45 (DE)**

(74) Vertreter: **Lüke, Dierck-Wilm, Dipl.-Ing., Gelfertstrasse 56, D-1000 Berlin 33 (DE)**

## (54) Elektromotorischer Antrieb.

(57) Es wird ein elektromotorischer Antrieb zur Verwendung vorrangig in Fahrzeugen beschrieben, welche Speicherbatterien benutzen, welcher eine Steuerung- und Regelungseinrichtung zur Wiederaufladung der Batterien besitzt, wenn die Beschleunigung des Antriebs vermindert wird, auch z. B. wenn das Fahrzeug durch Bremsen verzögert wird oder einen Abhang hinabfährt. Der Antrieb schließt in einem Drehschwungteil radial gesteuerte, bewegbare Kolben (6) oder schwere Massen ein, welche meist in Zylindern (5) gelagert sind, die von Spuleneinrichtungen (8) umgeben sind, welche über die Steuereinrichtung rhythmische Stromstöße erhalten. Die Kolben (6) oder freikolbenartigen, schweren, radial pulsierenden Massen werden zentripetal bei der Drehung des rotierenden Schwungteiles von Druckfedern (7) gegen die, die Kolben belebende Zentrifugalkraft zur Antriebsachse gepreßt, wobei bei Erreichung der Betriebsdrehzahl bzw. der dazu entsprechenden Drehgeschwindigkeit sich die genannten Zentripetalkräfte in jeder Kolbenlage ein statisch-dynamisches radiales Gleichgewicht mit den Zentrifugalkräften der rotierten Kolbenmassen halten, worauf die Steuerungskraft durch die genannten Spulenwicklungen (8) leicht einwirken kann. Das Aggregat stellt im übrigen eine elektrische Gleichstrommaschine dar, die im Pulsbetrieb und Mehrquadrantenbetrieb, meist mittels eines Gleichstrompulswandlers betrieben wird. Während der Rotation des Ankers (2) mit praktisch konstanter Drehzahl – selbst beim Beschleunigen, da dann die Kolbenfrequenz allein erhöht zu werden braucht –, wird in der Teilperiode der Kolbenradialpulsation, in der die Kolben nach außen gesteuert, schnell verlagert werden, sowohl den oben genannten Spulenwicklungen (8) um die Kolbenzylinder Batterien-Strom zugeleitet als auch den übrigen Gleichstromwicklungen des Ankers (2) und der Pole (3). Dabei wird zusätzlich Stromenergie quasi als potentielle Reserve in die Überwindung des dabei zeitvariabel zunehmen-

den Trägheitsmoments oder des Schwungmoments GD$^2$ des Schwungteils eingespeichert. In der Gegenphase oder Zeitperiode der Kolbenpulsation mit deren Zentripetalbewegung ist der Batterienstrom ausgeschaltet, dagegen dann das inertialomechanische Drallerhaltungs-Drehmoment der rheonom abnehmenden Rotordrehzahlbeschleunigungsenergie allein antriebswirksam.

Albrecht & Lüke, Gelfertstr. 56, D–1000 Berlin 33

Patentanwälte
Dipl.-Ing. Hans Albrecht
Dipl.-Ing. Dierck-Wilm Lüke

Gelfertstraße 56
D–1000 Berlin 33
Telefon: (030) 8 313028
Telegramme: Patentalbrecht Berlin
Postscheck: Berlin West 336 26-105
Bank: Berliner Bank AG
Konto-Nr. 43 09 53 99 00

| Ihr Zeichen | Ihre Nachricht | Unser Zeichen | Datum |
|---|---|---|---|
|  |  | 10295/L/LÜ | September 1981 |

Anmelder und Erfinder

Florian Raul Popescu- Goetsch, Ringstr. 15, D- 1000 Berlin 45

-------------------------------------------------------------------

Elektromotorischer Antrieb

-------------------------------------------------------------------

Die Erfindung bezieht sich vorwiegend auf einen elektromotorischen
Antrieb, insbesondere für Fahrzeuge mit Speicherbatterien,
im wesentlichen bestehend aus einem Anker, einem Stator
und einer elektrischen Steuerung einschl. Regelung für Pulsbetrieb.

In der neueren Zeit ist der Begriff "Motor" in der Fachsprache
durch den Begriff " Maschine " ziemlich verdrängt worden,
vor allem in der Elektrotechnik. Andererseits sollte und soll gerade in letzterem Bereich die Entwicklung von mit Batterien angetriebenen Motoren und Generatoren beim Mehrquadrantenbetrieb zwecks Wiederaufladung der Batterien stattfinden. Leider hemmt schon allein die starre Auffassung von den Elektromotoren als auschliessliche klassische nichtkybernetische "Maschinen" diejenige Entwicklungsmöglichkeit, die zu den geeigneten "engines" (englisch) bzw. "engins " (französisch) oder etwa "Aggregaten" (deutsch) für solch einen Antrieb führen könnte. In Fachkreisen wird vielfach gefragt, was noch Besseres auf dem Gebiete der Elektromotoren angeboten werden kann, obwohl eminente Fachfirmen bei grösseren " Maschinen" schon sehr hohe Wirkungsgrade erreicht haben. Diese Gegenfrage ist aber daher nicht berechtigt, weil es z.B. beim Elektromobil auf dasjenige Aggregat ankommt, das der jeweiligen Problematik, abhängig vor allem vom grossen Gewicht der Speicherbatterie, am besten und wirtschaftlichsten Rechnung trägt. Zwar ist gelegentlich bei neueren Forschungen stets die Bremsenergie des Elektromobils durch Mehrquadrantenbetrieb mehr oder weniger erfasst und ausgewertet worden, im Ergebnis bleibt dabei bei Verwendung von üblichen Gleichstrommotoren nicht viel übrig, weil die Bremszeiten im ganzen nicht lang genug sind, um den Speicherbatterien die nötige Zeit zur teilweisen Wiederaufladung zu gewähren. Erst ein komplexes kybernetisches oder- wie schon 1893 Heinrich Hertz mit seinem Genius voraussah- mit "Oberleitung " ausgebildetes mechanisches System, ein unfreies oder "geleitetes" System nach Hertz,besitzt derartige Eigenschaften, die dem Antriebsensemble, dem Antriebsaggregat Fähigkeiten der "besten Selbstbewirtschaftung" verleihen, z.B. ständig die geringsten anfallenden Energie- überschüsse aller Art und jeder Herkunft " der Weiterfunktionierung" um "jeden Preis" zu zuleiten. Diese Behauptung klingt etwas nebelhaft und paraphysikalisch. Bei Erfassung des wirklichen Sinnes der Kybernetik von Wiener können diese Ansätze leicht verstanden werden. Nur ist es so, dass in Wirklichkeit von verschiedenen "Kybernetikern" nur Teilaspekte dieses Bereiches verstanden und verwertet wurden. In Wirklichkeit ist ein echtes und komplexeres kybernetisches Aggregat einerseits ein offenes System mit Aufnahmefähigkeit auch von umgebender Feldenergie,vor allem dann, wenn es mit der eigenen Energieversorgung zwecks " Weiterschwingung des Ensembles" aus üblichen Vorräten hapert. In diesem Falle also wird auch sonst streunende Wärmeenergie im Notfalle zum eigenem parametrisch- resonatorischen " Pumpen" der Selbsterhaltung mitgerissen und die letztere Tendenz ist nun mal dem Ensemble eigen. Allerdings ist die letztere Tendenz um so ausgeprägter, je höher die noch aktiv mitwirkende Potenz n des Zeitfaktors $T^{-n}$ in den raumzeitlichen Ausdrücken der mechanisch- physikalischen Grössen der am Funktionieren des Ensembles hauptbeteiligten Vorgänge ist, beim Lebewesen z.B. ist auch n=4 aktiv beteiligt, sonstige kybernetische Ensembles situieren sich zwischen eigent-

-4-

lichen "Maschinen" und den Lebewesen. Der Unterschied zur Maschine ist klar von Hertz selbst unterstrichen worden, in/dem er einerseits das Hauptprinzip der "Maschine" umriss: Sie darf nur ein Wandler, d.h. ein Verbindungsglied sein und sie darf nur verschwindend kleine, etwa aktivierende eigene Masse und eigene Energie besitzen, und in/dem er andererseits von wundersamen Eigenschaften der isozyklischen Systeme mit konkreten Formeln berichtete, worüber etwas später der bekannte Wissenschaftler Ludwig Boltzmann noch präziseres Material hinzufügte.

Es ist also bekannt, bei elektromotorischen Antrieben Fahrzeuge mit Speicherbatterien die Bremsenergie durch Mehrquadrantenbetrieb zur Wiedergewinnung von Energie auszunützen. Bei Verwendung herkömmlicher Gleichstrommotoren ist die wiedergewonnene Nutzenergie jedoch äusserst gering, weil die Bremszeiten des Fahrzeuges insgesamt nicht lang genug sind, um den Speicherbatterien die notwendige Zeit zur mindestens teilweisen Wiederaufladung zu gewähren.

Der Erfindung liegt von daher die Aufgabe zugrunde, einen elektromotorischen Antrieb der gattungsgemässen Art zu schaffen, mit welchem während des Betriebes bei konstanter Leistung elektrische Energie eingespart werden kann, um so die Speicherbatterien zu schonen, und mit welchem darüberhinaus elektrische Energie beim Bremsen und bei Talfahrten zurückgewonnen werden kann und schliesslich die Grösse und das Gewicht der Batterien vermindert werden kann.

Die Lösung dieser Aufgabe ergibt sich aus den kennzeichnenden Merkmalen des Patentanspruches 1. Der erfindungsgemässe elektromotorische Antrieb arbeitet isozyklisch
und kybernetisch oder letztlich synergetisch. Er besitzt
Fähigkeiten der makro-mikroparametrischen Resonanz und ist
daher rheonom als offenes System wirksam und kann hierdurch auch
Feldenergie bzw. Thermische- oder Verbrennungsenergie aus
der Umgebung im Notfalle wie ein Lebewesen absorbieren,
um seine Schwingungsstabilität zeitlich aufrechtzuerhalten.
Ferner hat der Antrieb aktive eigene Massen und kann pulsweise
eigene Endergie zur Antriebs- Exergie werden lassen. Demgegenüber ist theoretisch eine elektrische oder andere Maschine
nur als ein Wandler geeignet und darf keine eigene Masse
und Energie besitzen ( siehe Hertz). Die Erfindung offenbart
eine gegenüber der sonst heute bekannten und vom raumzeitlichen
dimensionsanalytischen Ausdruck $\varrho L^5 T^{-1}$ (Impulswirkung) sich
unterscheidende - zusammenhängende Reihe von möglichen höheren
Arten von stationären Wirkungen und zwar $\varrho L^6 T^{-2}$, $\varrho L^7 T^{-3}$,
$\varrho L^8 T^{-4}$ usw. Bei konstanter Betriebsdrehzahl und Einhaltung
potentialo-resonatorisch zulässiger Lastmomente wird es
bei dem hier beschriebenen doppelt geleiteten, kybernetischen
Antrieb und unter Zuhilfenahme des Pulsbetriebes und eines
frequenzanpassenden Gleichstrompulswandlers möglich, bis zur
Einhaltung der stationären Wirkung $\varrho L^8 T^{-4}$ zu kommen, bei
der eine harmonische Zwangserregung des parametrisch erregten
und selbst erregungsfähigen Schwingers selbst die Arbeitsdämpfung bzw. das Lastmoment selbst teilweise als Anregungsenergie bei grösseren Ausschlägen ausgewertet wird.

Mittels der elektrischen oder elektromagnetischen Steuerung
bzw. Regelung der Radialbewegung der Massen können diese
nach dem bekannten Prinzip des Resonanz- Pulsations- Drehmotors mit dauerndem radialen Kräfteausgleich in jeder
Lage der oszillierenden Kolben zwischen den Fliehkräften und
den dazu reaktiven Federungskräften beim Resonanz- Gleichgewicht im Falle eingeregelter Betriebsdrehzahl arbeiten.
Die Massen sind dabei derart angeordnet und bemessen, dass
infolge der gesteuert-pulsweisen elektromotorischen Funktionierung
mittels eines Gleichstrompulswandlers auch die tangentiale
parametrische Beschleunigungs- Resonanzerregung seitens
der Elektromotorwicklungen im nötigen Takte während des
Fortschleuderns der Masse nach aussen aufrechterhalten wird.
Dadurch ist auch eine Verdoppelung oder Verdreifachung der
Pulsationsfrequenz im Augenblick einer Mehrleistung bzw.
Beschleunigung möglich. Es ist somit ferner möglich, dass
beim Zurückschwingen oder zentripetalen Zurückpulsieren der
Massen zur Abtriebsachse hin durch eine vorübergehende Erhöhung des schwungradartig- massisch-reaktiv- aktiven,
antreibenden Drallerhaltungs-Ankerdrehmomentes vom Anker
gleichzeitig ebenfalls höhere leistungsenergetische kybernetische Gesamtbeträge geliefert werden, wobei in diesen
Massenschwingungs-Teilperioden der Antriebs- bzw. Batterie-

-7-

strom völlig unterbrochen ist. Hierbei kann die z.B. aus der Speicherbatterie momentan aufgenommene Stromenergie in den alternierenden, rein elektromotorischen Massenfortschleuderungs-Teilperioden stets ungefähr das Doppelte des Normalen mittleren theoretischen Energieverbrauches der Nennleistung ausmachen. ( siehe H. Hertz " Mechanik, Kapitel über isozyklische Systeme"). Diese Zusatzspeicherung dient als Energiereserve für die erwähnten gegenläufigen inertialen Teilperioden. Dabei finden grundsätzlich entgegen der üblichen Schwungradfunktion und zur Aufrechterhaltung der isozyklischen Qualität eines Schwungintegrationssystemes keine nennenswerten Abweichungen von der Bemessungsbetriebsdrehzahl statt, lediglich die rheonome Variation des Momentes $GD^2$. Prinzipiell findet nur ein Übergleiten zu höheren Arten von schwingungsdynamischen Gleichgewichten statt, d.h. von dynamisch- stationären Wirkungen mit den dimensionsanalytischraumzeitlichen Ausdrücken $\varrho L^6 \cdot T^{-2}$ und $\varrho L^7 \cdot T^{-3}$ statt, bei denen im Falle der konstanten Drehzahl: die Arbeitsdämpfung teilweise mitanregend energetisch ausgenutzt wird, wie bei einer harmonischen Zwangserregung eines parametrisch-resonatorischen und selbsterregungsfähigen Schwingers.

Während der stets zeitlich je etwa ein Drittel der Dauer der Gesamtschwingungsperiode beanspruchenden, zuletzt genannten Teilperiode der Massenfortschleuderung nach aussen durchlaufen Ströme mit elektromagnetischen Auswirkungen die Spulenwicklungen um die Massen herum, um diese schnell nach aussen
zu steuern. Dies erfolgt zeitvariabel, frequenzmässig und
parametrisch - resonatorisch erregend. Während der Ankerdrehung
mit Betriebsdrehzahl werden die Massen im erforderlichen
Rhythmus ein bis mehrere Male in der Sekunde verlagert.
Andererseits kommt gleichzeitig die normale Funktion des
elektromotorischen Antriebes durch die überschüssig
bemessene Zuleitung von der Stromquelle in Gang, derart,
dass dabei auch die zusätzliche Energie für die zeitvariable
Mitbeschleunigung des schweren Ankers mit den nach aussen
gleitenden schweren Massen mitaufgebracht wird. Dies erfolgt
mit sich zeitlich vergrösserndem Trägheits- bzw. Schwungmoment
$GD^2$ gemäss der bekannten, jedoch modifizierten Gleichstrom-
Elektromotor- Differentialgleichung.

Während der oben beschriebenen Phasen leitet die elektrische
Steuerung während des Generatorbetriebes in den Massenrückführungs-Teilperioden zur Abtriebswelle jeden etwaigen
Drehenergieüberschuss , der sich durch Beendigung der Beschleunigung oder leichte Talfahrt des Fahrzeuges einstellt,
laufend über einen zwischengeschalteten, mit aufspeichernden
Kondensatorenkreis sowie über etwa benötigte Transformatoren
und einen Glättungs- Stromrichter zur dauernden Wiederaufladung der Speicherbatterie.

Hiermit können folglich elektrische Energiemengen durch gesteuerte Bewegung der Massen während der Betriebszahl wiedergewonnen und der Speicherbatterie zugeleitet werden. Hierdurch ergibt sich automatisch die Möglichkeit der Reduzierung der Grösse und des Gesamtgewichtes der Speicherbatterie.

Die Erfindung ist nachfolgend anhand eines Ausführungsbeispieles näher erläutert. Es zeigen:

Fig. 1 eine Prinzipdarstellung eines elektromotorischen Antriebes mit Resonanz-Pulsationsdrehmotor im Anker und

Fig. 2 ein Schema der Antriebsregelung des Elektro- Resonanz- Pulsationsdrehmotors.

Ein an sich bekannter Resonanz- Pulsations-Drehmotor (DE- 21 43 461 und DE -24 15 398 - F. R. Popescu), der nur parametrisch-resonatorische, aktive, radiale, pulsatorische Erregung von radial schwingenden, schweren Massen in Form von Freikolben 6 mit elastischer Gegenfederung in Form von Kegelstumpffedern 7 beinhaltet, weist bei Betriebsdrehzahl ein indifferentes Massen- bzw. Kolbengleichgewicht für alle Drehradien auf. Dieser Resonanz- Pulsations- Drehmotor dient

-10-

nunmehr zur Ausbildung des Kernteiles eines Ankers 2 eines
Nebenschluss- Gleichstrommotors mit Stator 1. Der Motor
kann beispielsweise mittels Speicherbatterien angetrieben
werden.

Der Rotor 2 ist in bekannter Weise innerhalb des Stators 1
drehbar gelagert, welcher vier Pole 3 aufweist, deren
Wicklungen elektrisch mit den Wicklungen 4 des Rotors 2
in bekannter Weise zusammenwirken. Die im Ausführungsbeispiel
gezeigten vier Massen in Form von stumpf-kegligen Freikolben 6
sind innerhalb von Radialzylindern 5 gelagert und mittels
Federungen in Form von Kegelstumpffedern 7 radial nach innen
in Richtung auf die Drehachse 9 des Ankers 2 gedrückt. Die
Kegelstumpffedern 7 sind dabei so bemessen, dass bei der
Betriebsdrehzahl des Elektromotors von z.B. 2000 oder
3000 U/min die Massen in Form der Freikolben gerade in
radialem, indifferenten, statisch- dynamischen Gleichgewicht
bei jedem Drehradius gehalten sind. In den kürzeren bzw.
zentrifugalen Teilperioden der radialen Schwingungen der
Massen bzw. Freikolben dienen elektromagnetische Wicklungen
8, die um jeden Radialzylinder 5 herum angeordnet sind,
dazu, um die Massen bzw. Freikolben 6 zur genauen Steuerung
bzw. Regelung in den vorgesehenen Sekundenbruchteilen schnell
nach aussen zu bringen. Gleichzeitig wird der elektrische
Hauptstrom von einer Speicherbatterie oder einer sonstigen

-11-

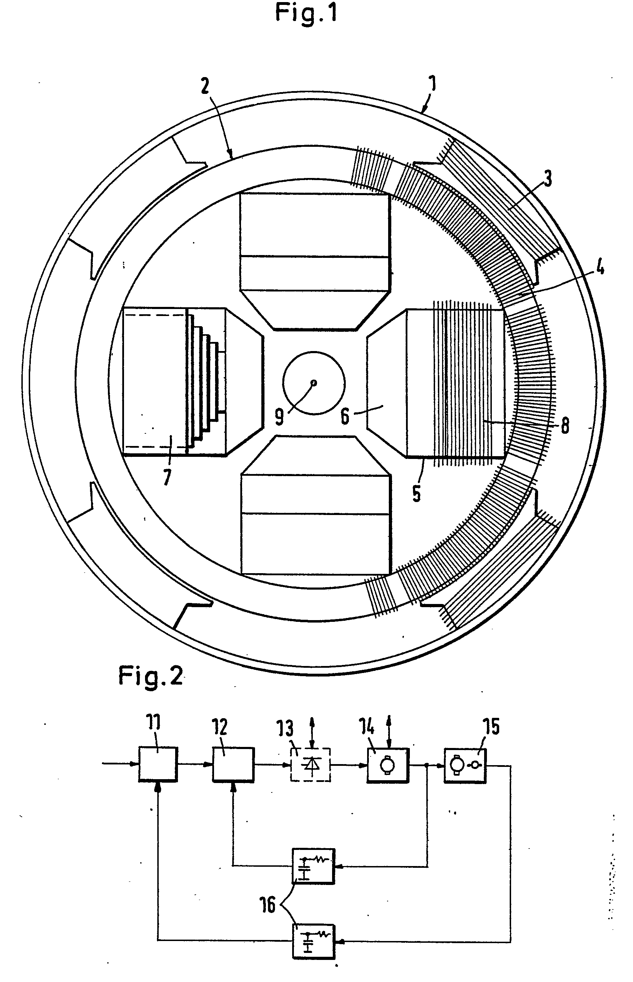

Spannungsquelle zur gleichzeitigen elektromotorischen Erzeugung einer kurzen tangentialo- rotationalen Drehbeschleunigung mittels der Wicklungen der Pole 3 und der Wicklungen 4 des Ankers 2 im Pulsbetrieb eingeleitet. Folglich sorgt der durch eine Steuerung bzw. Regelung, insbesondere Halbleitersteuerung ( Fig. 2) geleitete Gleichstrompulswandler auch für die jeweils erforderlichen radialen oben erwähnten Kolbenschwingungsfrequenzen, etwa 1 bis 2 oder 3-mal pro Sekunde. In den längeren Gegenperioden der zentripetalen Kolbenbewegungen bzw. deren radialer Oszillation, die ebenfalls simultan erfolgen, d.h. ziemlich abwechselnd dazwischenliegend, sorgt das Drallerhaltungsgesetz für das nötige Antriebsmoment, wobei der Strom unterbrochen wird. Es wird somit ein schwungradähnlicher gesteuerter Antrieb ermöglicht.

Das in Fig. 2 dargestellte einfache Schema der Antriebsregelung des eine konstante Drehgeschwindigkeit erhaltenden Elektro-Resonanz- Pulsations- Drehmotors beinhaltet einen n - Regler 11, ein i-Regler 12, einen Stromrichter 13 für statische Anlagen, die Wicklungen 4 des Ankers 2 , das Trägheitsmoment 15 und Filter 16. Die Drehzahl- Führungsgrösse für die stationäre, d.h. Betriebsdrehzahl ist $n_w$, die Stromführungsgrösse $i_w$, die Strom-Regelgrösse $i_a$ und die Drehzahlregelgrösse $n_m$. Die Führungsgröße $n_w$ oder der Sollwert

-12-

verlangt für den stationären Zustand der Regelung die Einhaltung einer bestimmten Bedingung, z.B. die Einhaltung der Drehzahl des Ankers 2. Dies wird durch Sollwert- und Istwert- Messungen überprüft. Bei festgestelltem Regelfehler wird die Regelabweichung verarbeitet, das Ergebnis tritt am Ausgang des Reglers als Führungsgrösse für den Regelkreis auf. Im Schema gibt ein Lageregler die Drehzahlführungsgrösse

$n_w$, der Drehzahlregler 11 die eigentliche Führungsgrösse $1_w$

für den Stromregelkreis vor. Vom Stromregler 12 wird danach der Leistungsteil gesteuert ( $u_w$ ).

P a t e n t a n s p r ü c h e

-----------------------------------

1. Elektromotorischer Antrieb , insbesondere Hybridelektromotor sowie - Generator oder - Antriebsverfahren, insbesondere als Antriebsaggregat für Elektroantriebe von Fahrzeugen
mit Speicherbatterie, insbesondere als hybrid funktionierender
Gleichstrommotor, aber auch für kleinere Kraftanlagen, mit
einer Halbleitersteuerung für sogenannten Pulsbetrieb und
gleichzeitig für Mehrquadrantenbetrieb, prinzipiell als kybernetisch- geleitetes- isozyklisches System eingestuft,
d a d u r c h   g e k e n n z e i c h n e t,
dass der Anker (2) radial pulsierende, schwere Freikolben (6)
enthält, die nach dem bekannten Prinzip des Resonanz-
Pulsations- Drehmotors mit radialem Kräfteausgleich zwischen
Fliehkräften und dazu reaktiven Federungskräften bei jeder
Kolbenposition im Falle etablierter Bemessungs-Betriebsdrehzahl arbeiten und die derart angeordnet und bemessen sind,
dass mittels eines Gleichstrompulswandlers auch die tangentiale parametrische Beschleunigungs- Resonanzerregung seitens
der Elektromotorwicklungen (3,4) im nötigen Takte während
des Fortschleuderns der Freikolben (6) nach aussen aufrechterhalten wird, so dass eine Verdoppelung oder Verdreifachung
der Pulsationsfrequenz in Augenblicken der Notwendigkeit einer Mehrleistung bzw. Fahrzeugsbeschleunigung leicht möglich ist und so dass beim Zurückschwingen oder Zurückpulsieren der Freikolben (6) zur Abtriebsachse (9) hin durch vorübergehende Erhöhung des schwungradartig -massisch- reaktiv-aktiven, hierbei allein antreibenden Drallerhaltungsanker-drehmomentes vom Anker (2) ebenfalls höhere leistungsenergetische,kybernetischeGesamtbeträge geliefert werden, wobei in diesen Kolbenschwingungs- Teilperioden der Batterien- oder Antriebsstrom völlig unterbrochen ist, wobei natürlich in den dabei alternierenden, rein elektromotorischen Kolbenfortschleuderungs-Teilperioden, die z.B. aus der Speicherbatterie momentan aufgenommene Stromenergie entsprechend etwa den Hertz'schen Formeln für isozyklische Systeme, stets ungefähr das Doppelte des normalen, mittleren theoretischen Betriebsenergieverbrauches der Nennleistung ausmacht, während dabei grundsätzlich,entgegen der üblichen Schwungradfunktion und zur Aufrechterhaltung der isozyklischen Qualität eines Schwungintegrationssystems keine nennenswerten Abweichungen von der Bemessungsbetriebsdrehzahl stattfinden und prinzipiell nur ein Übergleiten zu höheren Arten von schwingungsdynamischen Gleichgewichten, d.h. von stationären Wirkungen mit den dimensionsanalytisch-raumzeitlichen Ausdrücken $\varrho L^6 T^{-2}$ und $\varrho L^7 T^{-3}$ stattfindet, bei denen im Falle der Konstanz der Drehzahl sogar die Arbeitsdämpfung teilweise mitanregend energetisch ausgenutzt wird, insbesondere wie hier bei harmonischer Zwangserregung eines parametrisch- resona-

torischen und selbsterregungsfähigen Schwingers, und ferner, dass während der stets zeitlich je etwa ein Drittel der Gesamtschwingungsperiodedauer beanspruchenden, zuletzt genannten Teilperiode der Kolbenfortschleuderung nach aussen, einerseits Stromabzweigungen mit elektromagnetischer Auswirkung passend bemessene Wicklungen (9) um die Radialzylinder (5), welche die Freikolben (6) und die dazu entsprechenden Federungen (7) enthalten, ebenfalls zeitvariabel frequenzmässig und parametrisch - resonatorisch erregend durchlaufen, um die Freikolben (6) schnell nach aussen zu steuern, während der Ankerdrehung mit der Betriebsdrehzahl im erforderlichen Rhytmus ein bis mehrere Male in der Sekunde zu verlagern und andererseits gleichzeitig die normale Elektromotor-Funktion durch die überschüssig bemessene Zuleitung von der Stromquelle in Gang kommt, derart, dass dabei auch die zusätzliche Energie für die ad hoc zeitvariable Mitbeschleunigung des schweren Ankers (2) mit den nach aussen dabei gleitenden schweren Metallteilen ( Kolbenmasse 6), somit mit sich dabei zeitlich vergrösserndem Trägheits-bzw. Schwungmoment $GD^2$ mit aufgebracht wird, gemäss der modifizierten Gleichstrom- Elektromotor- Differentialgleichung, endlich noch dadurch, dass die automatisch arbeitende Halbleitersteuerung während des Generatorbetriebes in den Kolbenrückführungs-Teilperioden zur Abtriebswelle jeden etwaigen, bei nicht mehr Beschleunigen oder leichter Talfahrt usw. momentan aufkommenden Drehenergieüberschuss laufend über einen zwischengeschalteten,
mitaufspeicherden  : Kondensatorenkreis sowie etwa nötige
Transformatoren und einen Glättungs- Stromrichter zur
dauernden Wiederaufladung der Speicherbatterie leitet.

2. Elektromotorischer Antrieb nach Anspruch 1, dadurch
gekennzeichnet, dass der Kernteil des Ankers (2) enthaltend die
Kolben (6) unmittelbar neben dem Elektromotor und mit
diesem festgekoppelt angeordnet ist.

3. Elektromotorischer Antrieb nach Anspruch 1 oder 2,
dadurch gekennzeichnet, dass der Anker (2) mittels radialer
Federungen (7) gehaltene radialpulsierende Massen (6) enthält, die nach dem Prinzip des Resonanz-Pulsations-Drehmotors mit radialem Kräfteausgleich zwischen Fliehkräften
und dazu reaktiven Federungskräften bei jeder Massenposition
bei Betriebsdrehzahl arbeiten, und dass die Massen (6)
mittels von der elektrischen Steuerung angesteuerter elektrischer Spulenwicklungen (8) radial steuerbar sind, welche
die Massen (6) während der Ankerdrehung bei Betriebsdrehzahl
zyklisch schnell nach aussen verlagern.

4. Elektromotorischer Antrieb nach Anspruch 3, dadurch
gekennzeichnet, dass die Massen als Freikolben (6) ausgebildet und innerhalb von Radialzylindern (5) gelagert sind, welche von den elektrischen Spulenwicklungen (8) umgeben sind.

5. Elektromotorischer Antrieb nach Anspruch 3 oder 4, dadurch gekennzeichnet, dass als Federungen Kegelstumpffedern (7) oder Gasfedern und ähnliches vorgesehen sind.

6. Elektromotorischer Antrieb oder Aggregat nach Anspruch 3 oder 4 oder teilweise auch nach Anspruch 5, dadurch gekennzeichnet, dass hierbei kein Spezial- Kleinelektromotor als Anlassmotor für die Ingangsetzung des massiven Rotors einschliesslich des Freikolben- Schwungkörpers verwendet wird, um vom Stillstand aus die gewählte, zur Dimensionierung zugrundegelegte Drehgeschwindigkeit oder Dauerbetriebsgeschwindigkeit zu erreichen, und stattdessen das Anlassen der gesamten elektromotorischen Einheit ausnutzend die vermehrte Beschleunigung mit einem stärkeren Drehmoment.

7.Elektromotorischer Antrieb oder Aggregat nach Anspruch 3 oder 4 und 6, wahlweise auch nach Anspruch 5, dadurch gekennzeichnet, dass hierbei die Stromenergie nicht stets etwa doppelt sein muss in den elektromotorisch angetriebenen Teilperioden, sondern stattdessen durch die speziell angepasste Stromregelung hierbei erzielt wird, dass die Stromstärke des Batterienstromes gerade den momentan erforderlichen Betrag besitzt, wodurch auch die tangentiale parametrisch-resonatorische Erregung besser einsetzen kann und damit auch die grösste Wirtschaftlichkeit des Betriebes erreicht wird.

8. Elektromotorischer Antrieb oder Aggregat, desgleichen Antriebsverfahren oder vornehmlicher Generatorbetrieb im Mehrquadrantenbetrieb nach Anspruch 1 und 7, dadurch gekennzeichnet, dass hierbei die jenachdem als Motor oder als Generator vornehmlich arbeitende elektrische Maschine mit sogenanntem Nebenschluss ausgestaltet ist und diese hierbei einen Gleichstrompulswandler mit unterlagerter Zweipunkt-Stromregelung und einen unterlagerten Drehzahlregelungskreis besitzt und zudem über beim Anfahren notfalls sich einschaltende Pulsbreitensteuerung verfügt .

0049214

Fig.1

Fig.2

| | | Nummer der Anmeldung |
|---|---|---|
| **Europäisches Patentamt** | **EUROPÄISCHER RECHERCHENBERICHT** | EP 81 73 0096 |

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 745 016 (POPESCU) <br> * Seiten 1-4; Seite 5, Zeilen 28-33; Seiten 6,7; Seite 9, Zeilen 11-22; Seite 12, Zeilen 33-41; Seiten 13,14; Seite 53, Zeilen 12-43; Seiten 54,55; Seite 78, Zeilen 14-42; Seiten 79-80; Seite 81, Zeilen 1-25; Seite 84, Zeilen 20-43; Figuren 1,1A * | 1-8 |
| EP | DE - A - 2 942 073 (POPESCU) <br> * Seiten 1,2; Seite 4, Zeilen 21-29; Seite 16, Zeilen 24-39; Seiten 17,18,22; Figuren 1,1A * | 1-8 |
| | DE - A - 2 319 898 (BROWN BOVERI) <br> * Seite 1, Zeilen 3-14; Figuren 1-3 * | 8 |
| A | FR - A - 975 009 (PELLE) <br> * Seite 1, rechte Spalte, Zeilen 10-20; Seite 2, linke Spalte, Zeilen 17-38; Figuren 1,2 * | 1 |
| AD | DE - A - 2 143 461 (POPESCU) <br> * Seiten 13,14 * | 1 |
| A | DE - A - 2 317 724 (POPESCU) <br> * Seiten 18-20; Figuren 1,2 * <br> ./. | 1 |

### KLASSIFIKATION DER ANMELDUNG (Int. Cl.³)

H 02 K 7/02

### RECHERCHIERTE SACHGEBIETE (Int. Cl.³)

H 02 K 7/02
F 03 G 3/00
B 60 L 15/08

### KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 17-12-1981 | TIO |

EPA form 1503.1 06.78

| | | Europäisches Patentamt | **EUROPÄISCHER RECHERCHENBERICHT** | Nummer der Anmeldung EP 81 73 0096 -2- |

## EINSCHLÄGIGE DOKUMENTE

| Kategorie | Kennzeichnung des Dokuments mit Angabe, soweit erforderlich, der Maßgeblichen Teile | betrifft Anspruch | KLASSIFIKATION DER ANMELDUNG (Int. Cl.³) |
|---|---|---|---|
| AD | DE - A - 2 415 308 (POPESCU) <br> * Seiten 12-14; Figur 1 * <br><br> ----- | 1 | |
| | | | RECHERCHIERTE SACHGEBIETE (Int. Cl.³) |